Europäisches Patentamt

European Patent Office

Office européen des brevets

(19)

(11) Veröffentlichungsnummer: **0 291 898**
**A2**

(12) **EUROPÄISCHE PATENTANMELDUNG**

(21) Anmeldenummer: **88107792.9**

(22) Anmeldetag: **14.05.88**

(51) Int. Cl.⁴: **C08K 3/34 , C08L 95/00**

(30) Priorität: **19.05.87 DE 3716691**

(43) Veröffentlichungstag der Anmeldung:
**23.11.88 Patentblatt 88/47**

(84) Benannte Vertragsstaaten:
**AT BE CH DE ES FR GB GR IT LI LU NL SE**

(71) Anmelder: **becker bau GmbH & Co. KG**
**Segeberger Landstrasse**
**D-2351 Bornhöved(DE)**

(72) Erfinder: **Kadelka, Friedrich**
**Bussardweg 18**
**D-2360 Bad Segeberg(DE)**

(74) Vertreter: **UEXKÜLL & STOLBERG**
**Patentanwälte**
**Beselerstrasse 4**
**D-2000 Hamburg 52(DE)**

(54) **Verwendung von feinteiligem Gasbeton als Zusatzstoff im Asphaltmischgut zur Herstellung von Guss- und Walzasphalt.**

(57) Es wird die Verwendung von feinteiligem Gasbeton als stabilisierender Zusatzstoff im Asphaltmischgut zur Herstellung von Guß- und Walzasphalt beschrieben. Die mit diesem verhältnismäßig preiswerten Zusatzstoff, der in der Regel in einer Menge von 0,3 bis 10 Gew.% eingesetzt wird, erzielte Wirkung steht derjenigen bekannter Zusatzstoffe nicht nach, sondern übertrifft diese in vielen Fällen.

EP 0 291 898 A2

## Verwendung von feinteiligem Gasbeton als Zusatzstoff im Asphaltmischgut zur Herstellung von Guß- und Walzasphalt

Die Erfindung betrifft die Verwendung eines neuen stabilisierenden Zusatzstoffes im Asphaltmischgut zur Herstellung von Guß- und Walzasphalt.

Übliche (Asphalt)-Straßendecken bestehen aus drei Schichten, nämlich der unteren Tragschicht, der mittleren Binderlage und der oberen Verschleißschicht. Diese drei Schichten unterscheiden sich in ihrer Materialzusammensetzung, was unter anderem durch den unterschiedlichen Hohlraumgehalt zum Ausdruck kommt. Während die Verschleißschicht einen Hohlraumgehalt von etwa 2,5 bis 3 vol. % aufweist, liegt der Hohlraumgehalt bei der Binderlage im Bereich von etwa bis 5 bis 7 Vol. % und bei der Tragschicht im Bereich von etwa 10 bis 12 Vol. %. Die Verschließschicht dient im wesentlichen zur Abdichtung und soll dementsprechend möglichst dicht und wasserundurchlässig sein. Die Tragschicht dient im wesentlichen der Aufnahme der Tragbelastung (Achslasten) und die Binderlage überwiegend zur Aufnahme der Schubbelastung (dynamischer Verkehr). Die Binderlage zeichnet sich gewöhnlich durch verhältnismäßig hohe Splittgehalte im Bereich um 65 bis 75 Gew.% aus. Das Mischgut für Verschließschichten besitzt den höchsten Bindemittelgehalt von etwa 5,7 bis 9,0 Gew.% Bitumen und den relativ niedrigsten Splittgehalt von 30 bis 60 Gew.%. Der Hohlraum am Marshallprobekörper beträgt allgemein 1 bis 5 Vol. %. Definitionsgemäß wird als Splitt bezeichnet, was eine Teilchengröße von größer als 2 mm besitzt. Sand besitzt demgegenüber eine Teilchengröße von 0,09 bis 2 mm. Füller schließlich besitzt eine Teilchengröße von kleiner als 0,09 mm. Als Füller dienen herkömmlicherweise feine Gesteinsmehle.

Schon seit einiger Zeit ist es üblich, zur Vermeidung von Spurrinnen, d.h. zur Verbesserung der Standfestigkeit von Asphaltbelägen, dem Asphaltmischgut für die Herstellung von Guß- und Walzasphalt stabilisierende Zusatzstoffe wie organische und anorganische Faserstoffe, mit oder ohne ohne Mineralstoffbeimengungen, Naturasphalt, Diatomeenerde, Keiselgur, Trass, künstliche und natürliche Kieselsäuren, Kunstharze und polymer-modifiziertes Bitumen (PmB) zuzusetzen. Diese Praxis hat ihren Niederschlag in den "Zusätzlichen technischen Vorschriften und Richtlinien für den Bau von bituminösen Fahrbahndecken" - ZTV bis StB 84 - gefunden.

Die Wirkung dieser im Asphaltmischgut zur Herstellung von Guß-und Walzasphalt eingesetzten Zusatzstoffe besteht darin, daß sie zu einer Stabilisierung (erhöhter Verformungswiderstand) des Guß-und Walzasphalts, d.h. zu einer ausgeprägteren Versteifung des Mörtelanteils führen. Man kann diese Zusatzstoffe dementsprechend auch als Versteifungsmittel bezeichnen, weil sie mit ihrer sehr großen spezifischen Oberfläche Bitumen binden und somit die "innere Reibung" zwischen Mineralstoffpartikeln und Bitumenfilmen stark erhöhen können.

Die zur Zeit hauptsächlich verwendeten Zusatzstoffe haben den Nachteil, daß sie verhältnismäßig teuer sind.

Der Erfindung lag deshalb die Aufgabe zugrunde, einen stabilisierenden Zusatzstoff (Versteifungsmittel) für das Asphaltmischgut zur Herstellung von Guß- und Walzasphalt zu finden, der preiswerter als die zur Zeit verwendeten Zusatzstoffe ist, aber dennoch in seiner Wirksamkeit den bekannten Zusatzstoffen nicht nachsteht, sondern sie nach Möglichkeit noch übertrifft.

Zur Lösung dieser Aufgabe wird die Verwendung von feinteiligem Gasbeton als stabilisierender Zusatzstoff im Asphalt mischgut zur Herstellung von Guß- und Walzasphalt vorgeschlagen.

Feinteiliger Gasbeton wird durch Brechen von Gasbeton hergestellt. Erfindungsgemäß hat sich gezeigt, daß feinteiliger Gasbeton ein ausgezeichneter stabilisierender Zusatzstoff für das Asphaltmischgut zur Herstellung von Guß-und Walzasphalt ist. Die Körnung des feinteiligen Gasbetons kann 0 bis 2 mm und vorzugsweise 0 bis 0,71 mm betragen. Als besonders brauchbar hat sich feinteiliger Gasbeton mit einer Körnung von nicht mehr als 0,3 mm erwiesen. In der Praxis spricht man hier von einer Körnung von 0 bis 2 mm, 0 bis 0,7 mm oder 0 bis 0,3 mm, d.h. die auf dem Siebboden aufgefangene Fraktion, die alle Siebe passiert, ist mit umfaßt.

Die Herstellung und Zusammensetzung von Gasbeton ist bekannt (vergleiche z.B. DE-AS 12 32 863, DE-AS 12 54 654, DE-AS 16 46 580, DE-AS 27 09 858 und DE-OS 28 013). Als für die erfindungsgemäßen Zwecke gut geeignet haben sich beispielsweise die Gasbetone gemäß der DE-AS 16 46 580 erwiesen. Im allgemeinen werden erfindungsgemäß verwendbare Gasbetone im wesentlichen aus 40 bis 65 Gew.% Sand, 5 bis 25 Gew.% Weißfeinkalk, 15 bis 35 Gew.% Zement (vorzugsweise Portlandzement) und 0,5 bis 10 Gew.% Anhydrit (Calciumsulfat) unter Verwendung der üblichen Treibmittel wie insbesondere Aluminiumpulver hergestellt. Diese grundsätzliche Rezeptur kann in der Praxis selbstverständlich vielfältig variiert werden. Beispielsweise kann ein Teil des Sandes (bis zu 50%) durch Flugasche oder Schiefermehl ersetzt werden.

Der feinteilige Gasbeton wird erfindungsgemäß in einer Menge von 0,3 bis 10 Gew.% und vorzugsweise 1 bis 3 Gew.% eingesetzt, wobei sich diese Angaben wie in der Praxis üblich auf das Mineralstoffgemisch beziehen.

Selbstverständlich kann der erfindungsgemäß als stabilisierender Zusatzstoff verwendete feinteilige Gasbeton mit den oben genannten herkömmlichen stabilisierenden Zusatzstoffen kombiniert werden. Dies gilt insbesondere für Kieselsäuren, anorganische oder organische Faserstoffe, Diatomeenerde, Kieselgur und Trass. Gelegentlich werden bei der kombinierten Verwendung von feinteiligem Gasbeton und herkömmlichem stabilisierendem Zusatzstoff sogar noch zusätzliche Verbesserungen gegenüber der Verwendung von feinteiligem Gasbeton allein beobachtet. Die Beimengung des herkömmlichen stabilisierenden Zusatzstoffes zum feinteiligen Gasbeton beträgt in der Regel 10 bis 50 Gew.%, bezogen auf das Gesamtgewicht von feinteiligem Gasbeton und herkömmlichem stabilisierendem Zusatzstoff.

Versuche mit feinteiligem Gasbeton mit einer Körnung von 0 bis 0,3 mm haben gezeigt, daß eine sehr gute Versteifungswirkung erzielt wird. So ergab beispielsweise Gußasphalt selbst bei verhältnismäßig geringen Mengen von 1 bis 3 Gew.% an zugesetztem feinteiligem Gasbeton und verhältnismäßig niedrigem Splittgehalt Eindrucktiefen (DIN 1996, Teil 12), die im Bereich bis zu 2,0 bis 3,0 mm nach 5 Stunden Prüfdauer lagen. Außerdem wurde die Wasserempfindlichkeit nach TP Min, Teil 4.6.3.2. untersucht, wobei mit einem Wert von 0,69 Vol. % ein sehr günstiges Ergebnis erhalten wurde. Der obere Grenzwert für Asphaltverschleißschichten liegt gemäß ZTV-StB Hamb., Abs. 5.1.1., Tafel 2, bei 1,0 Vol. % und für Asphalt-Binderschichten bei 1,3 Vol. %. Schließlich wurde bei diesen Versuchen eine sehr hohe Marshall-Stabilität von 12,2 kN erreicht. Der Stabilitätsabfall auf 10,4 kN nach der Wasserlagerung, d.h. der Stabilitätsabfall von etwa 16 %, ist ebenfalls als äußerst günstig auzusehen.

Der erfindungsgemäße feinteilige Gasbeton ist verhältnismäßig preiswert. Die mit ihm erzielte Wirkung steht aber derjenigen bekannter Zusatzstoffe nicht nach, sondern übertrifft diese in vielen Fällen.

Beispiel

Es wurde Asphaltmischgut für Gußasphalt 0-11 mm aus 44 Gew.% Splitt, 27,6 Gew.% Sand, 21,0 Gew.% Füller (Kalkstein) und 7,4 Gew.% Gesamtbitumen hergestellt. Das Vermischen der Bestandteile erfolgte in einer Mischanlage und anschließend in einem Gußasphaltkocher bei etwa 240°C.

Bei einem ersten Versuch wurden dem Mischgut bezogen auf das Mineralstoffgemisch 2,0 Gew.% feinteiliger Gasbeton mit einer Körnung von 0-0,3 mm zugemischt. Aus dem Kocher wurde eine Probe gezogen und in eine flache Kastenform gegossen. Die erkaltete Probe wurde anschließend in einem genormten Eindrucktiefenmeßgerät untersucht. Bei 40°C und eine Prüfdauer von 5 Stunden wurde eine Eindrucktiefe von 1,8mm (Mittelwert aus zwei Messungen) ermittelt.

Der gleiche Versuch mit Naturasphalt (Trinidad-Epuré) ergab eine Eindrucktiefe von 4,3mm.

**Ansprüche**

1. Verwendung von feinteiligem Gasbeton als stabilisierender Zusatzstoff im Asphaltmischgut zur Herstellung von Guß- und Walzasphalt.

2. Verwendung nach Anspruch 1, dadurch gekennzeichnet, daß die Körnung des Gasbetons nicht größer als 0,3 mm ist.

3. Verwendung nach Anspruch 1 oder 2, dadurch gekennzeichnet, daß der Gasbeton in einer Menge von 0,3 bis 10 Gew.% verwendet wird.

4. Verwendung nach einem der Ansprüche 1 bis 3, dadurch gekennzeichnet, daß der Gasbeton im wesentlichen aus 40 bis 65 Gew.% Sand, 5 bis 25 Gew.% Weißfeinkalk, 15 bis 35 Gew.% Zement und 0,5 bis 10 Gew.% Anhydrit (Calciumsulfat) hergestellt worden ist.